# EUROPÄISCHE PATENTSCHRIFT

(11) **EP 3 194 135 B1**
(45) Veröffentlichungstag und Bekanntmachung des Hinweises auf die Patenterteilung: **04.09.2019**
(21) Anmeldenummer: 15742211.4
(22) Anmeldetag: 20.07.2015
(51) Int. Cl.: B29C 33/00, B29C 70/30, B29L 31/00

(54) **VERFAHREN ZUR HERSTELLUNG EINES DREIDIMENSIONALEN FASERVERBUNDWERKSTOFFBAUTEILS**
METHOD FOR PRODUCING A THREE-DIMENSIONAL FIBER COMPOSITE COMPONENT
PROCÉDÉ POUR LA FABRICATION D'UNE PIÈCE TRIDIMENSIONNELLE EN UN MATÉRIAU COMPOSITE FIBREUX

(30) Priorität: 18.09.2014 DE 102014218799
(43) Veröffentlichungstag der Anmeldung: 26.07.2017
(73) Patentinhaber: Bayerische Motoren Werke Aktiengesellschaft, 80809 München (DE)
(72) Erfinder: HOGGER, Thomas, 83624 Otterfing (DE); KOLBINGER, Michael, 84051 Essenbach (DE); KONRAD, Oleg, 84030 Ergolding (DE); MICHL, Sebastian, 86551 Aichach (DE)
(86) Internationale Anmeldenummer: PCT/EP2015/066538
(87) Internationale Veröffentlichungsnummer: WO 2016/041663

(56) Entgegenhaltungen:
- WO-A1-2015/043845

## Beschreibung

Die Erfindung betrifft ein Verfahren zur Herstellung eines dreidimensionalen Faserverbundwerkstoffbauteils unter Nutzung von Faserbündeln.

Aus dem Stand der Technik sind verschiedene Herstellungsvarianten von faserverstärkten Kunststoffbauteilen bekannt, u.a. eine CFK-Schalenbauweise, CFK-Flechtbauweise, CSMC-Bauweise. Ferner sind Herstellungsverfahren mit Hohlprofilen oder die Verwendung von Blechschalen seit langem bekannt. Trotz stetiger Weiterentwicklung und Anpassung auch an eine Massenfertigung sind die dabei hergestellten Bauteile vergleichsweise teuer beziehungsweise schwer.

In der Patentanmeldung DE 10 2013 219 820 A wird ein Verfahren zur Herstellung eines Faserverbundwerkstoffbauteils unter Verwendung von Faserbündeln beschrieben, wodurch Gewicht und Kosten eingespart werden können. Dabei wird vorgesehen, Faserbündel mit einer Matrix aus thermoplastischem und/oder duroplastischem Material zu verbinden, dass sie ein Profil bilden und zwischen den Faserbündeln Verstrebungsmittel angeordnet sind.

Bei dem bekannten Verfahren müssen Faserbündel in verschiedene Richtungen und mit verschiedenen Krümmungen umgeformt werden, um die vorbestimmte Bauteilform zu gewährleisten.

Weiterer Stand der Technik ist aus der WO 2015/043845 A1 bekannt.

Aufgabe der vorliegenden Erfindung ist es, ein Verfahren bereit zu stellen, mit dem die Faserbündel leicht, kostengünstig und mit möglichst geringem Werkzeugeinsatz umgeformt werden können. Ferner soll eine Umformeinrichtung bereit gestellt werden, mit der Faserbündel schneller und ohne zusätzlichen Werkzeugeinsatz dreidimensional umgeformt werden können.

Diese Aufgabe wird gelöst durch ein Verfahren mit der Merkmalskombination gemäß Patentanspruch 1.

Dabei wird erfindungsgemäß grundsätzlich ein Verfahren zur Herstellung eines dreidimensionalen Faserverbundwerkstoffbauteils mit Faserbündeln vorgesehen, wobei die Faserbündel über eine Formvorgebungsvorrichtung aus einer stab- oder strangförmigen Ausgangsform in eine dreidimensionale vorbestimmte Bauteilform umgeformt werden, und die Formvorgebungsvorrichtung mindestens einen Umformkanal umfasst, der entlang seiner Längsrichtung eine für das Faserverbundwerkstoffbauteil vorbestimmte erste Krümmung aufweist und mindestens eine Anlaufkante ausbildet, wobei die Faserbündel gegen die mindestens eine Anlaufkante des Umformkanals gedrückt werden und dabei die vorbestimmte erste Krümmung annehmen. Die erste vorbestimmte Krümmung entspricht einer Krümmung entlang der Längserstreckung des Faserbündels. Die Anlaufkante wird durch eine seitliche Außenwand des Umformkanals gebildet.

Zusätzlich zeichnet sich das erfindungsgemäße Verfahren durch eine Umformung in einer weiteren Richtung aus, die im Wesentlichen senkrecht zur ersten Richtung ist. Entlang des Umformkanals ist hierfür bodenseitig eine Formkante ausgebildet, gegen welche die Faserbündel gedrückt werden und dabei die vorbestimmte zweite Krümmung für das Faserverbundwerkstoffbauteil annehmen. Die erste und zweite Krümmung erfolgen beispielsweise in X- und Z-Richtung in dem Umformkanal, wobei sich die Faserbündel in Y-Richtung erstrecken und alle Richtungen zueinander senkrecht stehen. Die Verfahrensschritte werden dann dadurch gebildet, dass ein Faserbündel zunächst an einen Umformkanal der Formvorgebungsvorrichtung zugeführt, anschließend gegen die Anlaufkante des Umformkanals und schließlich gegen die bodenseitige Formkante gedrückt wird, so dass sich eine dreidimensionale Endform des jeweiligen Faserbündels einstellt. Die Bewegungsrichtungen sind vorzugsweise jeweils zueinander senkrecht, d.h. die Zuführung des Faserbündels erfolgt in Z-Richtung, das Andrücken an die Anlaufkante in X-Richtung und das Andrücken an die Formkante wieder in Z-Richtung.

Hierbei ist günstig, dass zusätzlich Werkzeugeinrichtungen wie Schieber und dergleichen nicht benötigt werden, wodurch die Herstellungskosten reduzierbar sind.

In einem Ausführungsbeispiel bildet die Anlaufkante gegenüber einem Zuführabschnitt eine Stufe, so dass das Faserbündel in den Umformkanal einführbar und anschließend gegen die Anlaufkante drückbar ist.

In einer günstigen Ausführung sind die Faserbündel harzgetränkt bzw. harzgetränkte Thermoplastfaserbündel. Ferner sind die Faserbündel vorzugsweise aus Endlosfasern und mit Glasfasern oder Kohlefasern gebildet. Die Faserbündel können im Querschnitt rund, rechteckig oder quadratisch ausgebildet sein und weisen im letzteren Fall eine Größe von in etwa 10x10 mm auf.

Die letztliche Fertigstellung des Faserverbundwerkstoffbauteils mit den dreidimensional umgeformten und die erste und zweite Krümmung aufweisenden Faserbündeln erfolgt in einem herkömmlichen Presswerkzeug.

Die Erfindung umfasst auch die gleichzeitige Umformung mehrerer Faserbündel, wobei die Formvorgebungsvorrichtung hierfür mehrere Umformkanäle umfasst. Die Umformkanäle können sich dabei im Wesentlichen parallel entlang der X-Richtung der Formvorgebungsvorrichtung erstrecken. Die Faserbündel können über einen Spannrahmen gehalten und den einzelnen Umformkanälen zugeführt werden. Dabei ist vorteilhaft, dass schneller eine Vielzahl von Faserbündeln in die Endform gebracht werden können und mehrere Bauteile in einem Werkzeug umformbar sind.

In einer Ausführung der Erfindung ist ferner vorgesehen, dass die mehreren Umformkanäle der Formvorgebungsvorrichtung verschiedene erste Krümmungen und/oder Anlaufkanten mit verschiedenen zweiten Krümmungen aufweisen, so dass mehrere Faserbündel gleichzeitig in verschiedene dreidimensionale Formen für das dreidimensionale Faserverbundwerkstoffbauteil umgeformt werden. Die unterschiedlichen Strukturen ermöglichen eine beliebige Formgebung des Faserverbundwerkstoffbauteils in 3D.

Die Erfindung umfasst ferner die Formvorgebungsvorrichtung für stab- oder strangförmige Faserbündel zur dreidimensionalen Umformung der Faserbündel und einer vorstehend beschriebenen Ausbildung. Die Formvorgebungsvorrichtung zeichnet sich dadurch vorteilhaft aus, dass ohne Zusatzwerkzeuge Faserbündel in zumindest ein oder zwei Richtungen dreidimensional umformbar sind.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig.1: eine perspektivische Ansicht einer Formvorgebungsvorrichtung;
- Fig.2: eine Schnittansicht der Formvorgebungsvorrichtung zur Darstel-lung der Verfahrensschritte des Umformens,

Die Figuren sind beispielhaft schematisch. Gleiche Bezugszeichen benennen gleiche Teile in allen Ansichten.

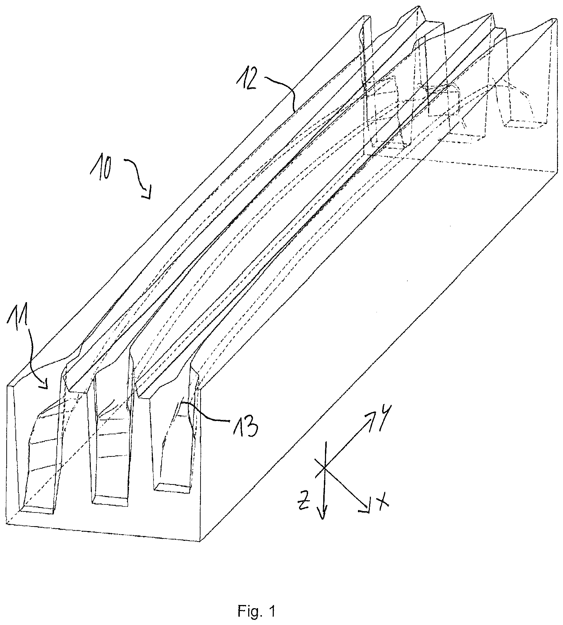

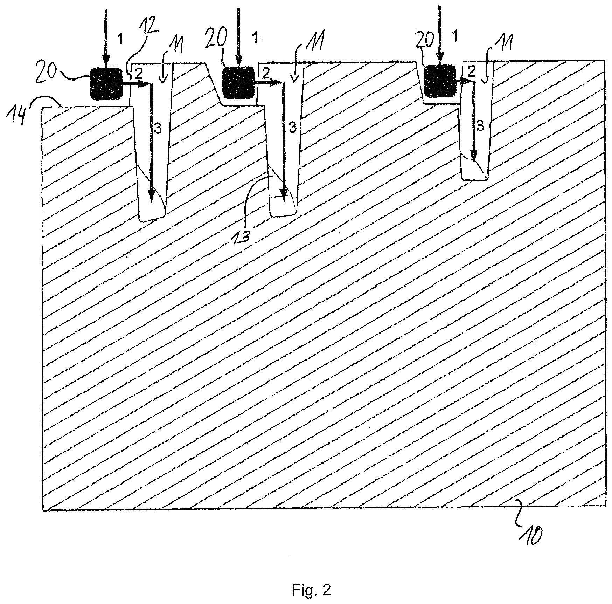

Figur 1 ist eine perspektivische Ansicht der Formvorgebungsvorrichtung 10 mit drei sich in Y-Richtung erstreckenden Umformkanälen 11, mit denen Faserbündel 20, wie in Figur 2 dargestellt, in drei Schritten 1, 2, 3 dreidimensional umgeformt werden. Di Umformkanäle 11 weisen entlang ihrer Längsrichtung (Y-Richtung) jeweils eine in X-Richtung bogenförmig gekrümmte Anlaufkante 12 auf. In der gezeigten Ausführung erstreckt sich die Bogenform im Wesentlichen über die gesamte Länge der Umformkanäle 11, sie kann jedoch auch kürzer ausgebildet sind. Bodenseitig weist jeder Umformkanal 11 eine Formkante 13 auf, die ebenfalls im Wesentlichen über die gesamte Länge des Umformkanals 11 bogenförmig gekrümmt ist, jedoch in Z-Richtung. Diese beiden Krümmungen bestimmen die Endform des gewünschten Faserverbundwerkstoffbauteils.

Figur 2 zeigt beispielhaft die Schritte des Umformprozesses unter Nutzung der Formvorgebungsvorrichtung 10 mit beispielhaft drei Umformkanälen. Die Faserbündel 20 werden in einem ersten Schritt 1 in Z-Richtung an die Formvorgebungsvorrichtung 10 in einen Bereich neben den Umformkanälen 11 gefahren, anschließend in einem zweiten Schritt 2 in X-Richtung gegen die Anlaufkante 12 gedrückt und schließlich in Z-Richtung verfahren und gegen die Formkante 13 gedrückt, so dass sich das Faserbündel 20 sowohl in X-Richtung als auch in Z-Richtung verformt. Die Form der Anlaufkante 12 und Formkante 13 bestimmen die Bauteilform. Randbereiche der Formkanten 13 werden dementsprechend ausgebildet.

Die Faserbündel 20 sind bei der Umformung harzgetränkt, werden anschließend mit Kunststoff umspritzt und schließlich über ein Presswerkzeug mit herkömmlichen, dem Fachmann bekannten Verfahren zum fertigen Faserverbundwerkstoffbauteil fertiggestellt. Die Faserbündel 20 weisen in der gezeigten Darstellung einen im Wesentlichen quadratischen Querschnitt mit einer Kantenlänge von ca. 10 mm auf. Mehrere Faserbündel 20 können gleichzeitig unter Nutzung beispielsweise eines Spannrahmens in mehrere Umformkanäle 11 geführt werden, so dass die oben beschriebenen Schritte gleichzeitig an einer Vielzahl von Faserbündeln 20 durchführbar ist.

In dem gezeigten Ausführungsbeispiel bildet die Anlaufkante 12 gegenüber dem Zuführabschnitt 14 eine Stufe in Z-Richtung, so dass das Faserbündel 20 vollständig in den Umformkanal 11 in Z-Richtung einführbar und anschließend gegen die Anlaufkante 12 in X-Richtung gedrückt werden kann.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise können in dem Umformkanal auch weitere Kanten vorgesehen werden, um spezielle Geometrien darzustellen. Auch ist die Anzahl der Umformkanäle pro Formvorgebungsvorrichtung nicht beschränkt und kann wahlweise und soweit technisch möglich und sinnvoll angepasst werden.

## Patentansprüche

1. Verfahren zur Herstellung eines dreidimensionalen Faserverbundwerkstoffbauteils mit Faserbündeln (20), die über eine Formvorgebungsvorrichtung (10) aus einer stab- oder strangförmigen Ausgangsform in eine dreidimensionale vorbestimmte Bauteilform umgeformt werden, wobei die Formvorgebungsvorrichtung (10) mindestens einen Umformkanal (11) umfasst, der entlang seiner Längsrichtung eine für das Faserverbundwerkstoffbauteil vorbestimmte erste Krümmung aufweist und mindestens eine Anlaufkante (12) ausbildet, wobei die Faserbündel (20) gegen die mindestens eine Anlaufkante (12) des Umformkanals (11) gedrückt werden und dabei die vorbestimmte erste Krümmung annehmen.

2. Verfahren nach Anspruch 1, **dadurch gekennzeichnet, dass** entlang des Umformkanals (11) bodenseitig eine Formkante (13) ausgebildet ist, gegen welche die Faserbündel (20) gedrückt werden und dabei eine vorbestimmte zweite Krümmung für das Faserverbundwerkstoffbauteil annehmen.

3. Verfahren nach Anspruch 1 oder 2, **dadurch gekennzeichnet, dass** die Faserbündel (20) harzgetränkt sind.

4. Verfahren nach Anspruch 1 oder 2, **dadurch gekennzeichnet, dass** die Faserbündel (20) mit Thermoplast umgeben sind.

5. Verfahren nach zumindest einem der vorigen Ansprüche, **dadurch gekennzeichnet, dass** die mit der ersten und zweiten Krümmung versehenen Faserbündel (20) in einem Presswerkzeug zu dem dreidimensionalen Faserverbundwerkstoffbauteil zusammengefügt und fertiggestellt werden.

6. Verfahren nach zumindest einem der vorigen Ansprüche, **dadurch gekennzeichnet, dass** die Formvorgebungsvorrichtung (10) mehrere Umformkanäle (11) umfasst, in denen gleichzeitig mehrere Faserbündel (20) umgeformt werden.

7. Verfahren nach dem vorigen Anspruch, **dadurch gekennzeichnet, dass** die mehreren Umformkanäle (11) der Formvorgebungsvorrichtung (10) verschiedene erste Krümmungen und/oder Anlaufkanten (12) mit verschiedenen zweiten Krümmungen aufweisen, so dass mehrere Faserbündel (20) gleichzeitig in verschiedene dreidimensionale Formen für das dreidimensionale Faserverbundwerkstoffbauteil umgeformt werden.

8. Verfahren nach zumindest einem der vorigen Ansprüche, **dadurch gekennzeichnet, dass** die umgeformten Faserbündel (20) mit thermoplastischem und/oder duroplastischem umspritzt werden.

## Claims

1. A method for producing a three-dimensional fibre composite material component with fibre bundles (20) which are shaped into a three-dimensional predetermined component form from a rod-shaped or strand-shaped initial form by way of a form-defining device (10), wherein the form-defining device (10) comprises at least one shaping channel (11) which in its longitudinal direction has a first curvature predetermined for the fibre composite material component and forms at least one leading edge (12), wherein the fibre bundles (20) are pressed against the at least one leading edge (12) of the shaping channel (11) and in so doing adopt the predetermined first curvature.

2. A method according to Claim 1, **characterised in that** along the shaping channel (11) there is formed on the bottom a forming edge (13) against which the fibre bundles (20) are pressed and in so doing adopt a predetermined second curvature for the fibre composite material component.

3. A method according to Claim 1 or Claim 2, **characterised in that** the fibre bundles (20) are impregnated with resin.

4. A method according to Claim 1 or Clai, 2, **characterised in that** the fibre bundles (20) are surrounded with thermoplastic material.

5. A method according to at least one of the preceding claims, **characterised in that** the fibre bundles (20) provided with the first and second curvature are assembled and finished to form the three-dimensional fibre composite material component in a compression mould.

6. A method according to at least one of the preceding claims, **characterised in that** the form-defining device (10) comprises a plurality of shaping channels (11) in which a plurality of fibre bundles (20) are shaped simultaneously.

7. A method according to the preceding claim, **characterised in that** the plurality of shaping channels (11) of the form-defining device (10) have different first curvatures and/or leading edges (12) with different second curvatures, so that a plurality of fibre bundles (20) are shaped simultaneously into different three-dimensional forms for the three-dimensional fibre composite material component.

8. A method according to at least one of the preceding claims, **characterised in that** the shaped fibre bundles (20) are sheathed with thermoplastic and/or thermoset material.

## Revendications

1. Procédé d'obtention d'une pièce en un matériau composite renforcé par des fibres à trois dimensions comprenant des faisceaux de fibres (20) qui sont formés par un dispositif de mise en forme (10) à partir d'une forme de départ de barreau ou de cordon selon une forme de pièce tridimensionnelle prédéfinie, le dispositif de mise en forme (10) comprenant au moins un canal de mise en forme (11) qui comporte le long de sa direction longitudinale une première courbure prédéfinie pour la pièce en matériau composite renforcé par des fibres et forme au moins une arête d'entrée (12), les faisceaux de fibres (20) étant comprimés contre l'arête d'entrée (12) du canal de mise en forme (11) et prenant ainsi la première courbure prédéfinie.

2. Procédé conforme à la revendication 1,
**caractérisé en ce que**
le long du canal de mise en forme (11), du côté de son fond est formée une arête de mise en forme (13) contre laquelle les faisceaux de fibres (20) sont comprimés et prennent ainsi une seconde courbure prédéfinie pour la pièce en matériau composite renforcé par des fibres.

3. Procédé conforme à la revendication 1 ou 2,
**caractérisé en ce que**
les faisceaux de fibres (20) sont imprégnés de résine.

4. Procédé conforme à la revendication 1 ou 2,
**caractérisé en ce que**
les faisceaux de fibres (20) sont entourés par une matière thermoplastique.

5. Procédé conforme à au moins l'une des revendications précédentes,
**caractérisé en ce que**
les faisceaux de fibres (20) ayant la première courbure et la seconde courbure sont rassemblés et finis dans un outil de compression pour permettre d'obtenir la pièce en un matériau composite renforcé par des fibres.

6. Procédé conforme à au moins l'une des revendications précédentes,
**caractérisé en ce que**
le dispositif de mise en forme (10) comprend plusieurs canaux de mise en forme (11) dans lesquels sont mis en forme simultanément plusieurs faisceaux de fibres (20).

7. Procédé conforme à la revendication précédente,
**caractérisé en ce que**
les canaux de mise en forme (11) du dispositif de mise en forme (10) comportent des premières courbures différentes et/ou des arêtes d'entrée (12) ayant des secondes courbures différentes de sorte que plusieurs faisceaux de fibres (20) soient simultanément mis en forme selon différentes formes tridimensionnelles pour la pièce en matériau composite renforcé par des fibres tridimensionnelles.

8. Procédé conforme à au moins l'une des revendications précédentes,
**caractérisé en ce que**
les faisceaux de fibres mis en forme (20) sont injectés avec un matériau thermoplastique et/ou thermodurcissable.
